# EUROPEAN PATENT APPLICATION

(11) **EP 3 035 226 A1**
(43) Date of publication of application: **22.06.2016**
(21) Application number: 14835819.5
(22) Date of filing: 12.08.2014
(51) Int. Cl.: G06F 21/46

(54) **SECURITY SYSTEM, APPARATUS AND METHOD USING ADDITIONAL CODE**

(30) Priority: 12.08.2013 KR 20130095626; 29.01.2014 KR 20140011719; 27.02.2014 KR 20140023513
(71) Applicant: Park, Hyeon Soo, Seoul 138-892 (KR)
(72) Inventor: Park, Hyeon Soo, Seoul 138-892 (KR)
(74) Representative: Algemeen Octrooi- en Merkenbureau B.V.
(86) International application number: PCT/KR2014/007489
(87) International publication number: WO 2015/023109

(57) **Abstract**

The present invention relates to a system and a method for controlling the use of electronic equipment using a code input method and, more specifically, to a security system, apparatus and method using an additional code, in which the use of functions or services of electronic equipment such as smartphones, mobile equipment, computers, banking terminals, door electronic equipment and service providing servers is restricted, or an additional function for user's convenience is controlled, by using a code input method combined with an additional code having an additional function; and when the electronic equipment is exposed to a criminal, the electronic equipment operates as normal, notifying a response institution of the emergency situation while the criminal's requests are carried out by using a disguised control code including an additional code having an additional function disguised as an authentication code, thereby protecting a user from a crime.

## Description

### [Technical Field]

The present invention relates to a system and method for controlling use of an electronic device based on a code input method. More particularly, the present invention relates to a system and method for restricting use of functions or services of various user electronic devices, such as smartphones, mobile devices, computers, banking terminals, and electronic door devices, controlling additional functions for user convenience, and reporting an emergency using a code input method of combining additional codes having additional functions.

In addition, the present invention relates to a system, apparatus, and method that can report an emergency situation without alerting a criminal while performing normal operation and carrying out demands of the criminal using a dummy control code including an additional code having a function of masquerading as an authentication code, when a user is threatened by the criminal.

Further, the present invention relates to a system, apparatus, and method that can report an emergency situation while displaying a dummy display making it appear that demands of a criminal are being carried out.

### [Background Art]

Modem people use lots of electronic communication devices to exchange information, manage entrance security, and conduct banking transactions.

Among electronic devices, taking a smartphone as an example, a user generates a user lock pattern or a user lock password through a security application for configuration of a smartphone and, based thereon, performs user authentication with the pattern or the password in use of the smartphone, thereby allowing normal operation of the smartphone.

By way of another example, a user who wants to use a banking service (for example, cash withdrawal) through an automated teller machine (ATM) (i.e. banking terminal) inserts his cash card into the banking terminal and inputs a normal user lock password, thereby allowing normal use of the service. In addition, when a user wants to unlock a door lock (i.e. an electronic door device) of a vehicle or an office, the user must input a normal user unlock password.

As such, typical methods for inputting a user lock password have problems of poor user convenience and security since only one operation (for example, restriction/restriction removal on use) can be performed in response to input of one secret code.

For example, assuming that a user uses a banking terminal, unlocking some functions (for example, deposit, remittance, etc.) through user authentication and restricting other functions (for example, cash withdrawal) cannot be simultaneously performed. In addition, unlocking a door lock and operating desired indoor appliances of user choice cannot be simultaneously performed and unlocking a smartphone and specific functions of user choice cannot be simultaneously performed.

Further, a user must be careful not to expose a user lock code (i.e. password) to other persons.

However, despite being careful, there can be a situation in which a user is forced to expose a user lock code due to a criminal threat or kidnapping. In this case, the user must naturally report an emergency situation to a specific agency (for example, a police station, a server administrator, a bank, a service manager, etc.) so that the criminal is not aware thereof while complying with criminal's demands (i.e. allowing unlocking to be achieved) in order to protect himself or herself from the criminal.

Korean Patent Laid-open Publication No. 10-2011-0066404 entitled "Method and System of self-calling and emergency report using mobile device, and Recording medium thereof" disclose a system and method for performing a self-calling function through input of a specific pattern so as to deal with an emergency situation according to a predefined scheme.

However, this system and method can only be applied to a mobile device operable in a self-calling mode and is insufficient to ensure that, when threatened by a criminal, a user can deceive the criminal into believing that a device is operating normally in an emergency, thereby protecting the user.

In addition, Korean Patent Laid-open Publication No. 1998-015298 discloses a system wherein an emergency password separate from a common password is set in a banking device, and, when the emergency password is input, the banking device determines this situation as an abnormal transaction, such as a crime, and issues an alarm and allows the situation to be displayed while normally performing banking operations.

However, this system requires a separate verification procedure for recovering damages and has a disadvantage in that a banking server must store the emergency password and provide an operation corresponding thereto.

### [Disclosure]

### [Technical Problem]

The present invention has been conceived to solve such problems in the art and is directed to providing means applicable to a mobile device or a computer wherein a user uses a device lock device based on a secret code or a secrete pattern, a digital door lock restricting entry into buildings, a banking device such as an ATM, or other electronic devices using a user security code input method.

It is an aspect of the present invention to provide a security system, apparatus, and method using an additional code, in which, in use of a normal security code such as a user password or pattern, a user electronic device stores a control code in which an authentication code, an additional code identifier, and at least one of a plurality of additional codes are combined into one, the user electronic device stores an additional function performed corresponding to the additional code, when the user device is unlocked by an authentication code in a control code input to the user device, the user device itself performs the additional function corresponding to the additional code in the control code, and if the additional function is not executable by the user device itself, the user electronic device transmits the control code to an external server communicatively connected to the user device to request that the service providing server perform the additional function.

It is another aspect of the present invention to provide a security system, apparatus, and method using an additional code, in which a user generates a normal security code such as a user secret code or pattern and a dummy control code or disguised pattern which is a control code including an additional code having an additional function to masquerade as an authentication code and stores and registers the security code and the dummy control code in a user device or an external response agency, and when the user is in danger, such as during a crime, the user uses the dummy control code instead of the authentication code to allow the user device to operate in the same manner as when receiving the authentication code or to allow the device to internally notify the external response agency of an emergency situation through a code control unit of the user device to protect the user from a crime while displaying a dummy display to deceive a criminal into believing that the device is operating normally.

### [Technical Solution]

The present invention may be applied to a security system including a user device, which is an electronic device receiving a security code from a user, such as a smartphone, a mobile device including a tablet, a digital door lock restricting entry into a building, and a banking device such as an ATM through the following embodiments.

In accordance with one aspect of the present invention, an electronic device having a user security code input function includes: a code input unit receiving a security code from a user; a code storage unit storing an authentication code and an additional code for identifying whether the security code received from a user is an authentication code allowing entry into a normal operation mode or a control code including a separate additional code; and a code control unit comparing the received security code with the authentication code and the additional code stored in the code storage unit to determine whether the received security code is the authentication code or the control code, wherein the code control unit allows the electronic device to perform an operation corresponding to the authentication code when the security code received by the code input unit is the authentication code, whereas the code control unit allows the electronic device to perform an additional operation corresponding to the additional code when the security code is the control code including the additional code.

The additional function corresponding to the additional code in the control code may include an operation corresponding to the authentication code; and the code control unit extracts the authentication code corresponding to the additional code from the code storage unit storing the authentication code, and allows the electronic device to execute the authentication code extracted from the code storage unit, or transmits the authentication code to a service providing server, thereby performing the same operation as the operation corresponding to the authentication code input to the code input unit.

The control code may include the authentication code; the code control unit extracts the authentication code in the received control code to perform authentication and executes an operation corresponding to the authentication code; and the control code does not allow the electronic device to perform a normal operation corresponding to the authentication code without authentication of the extracted authentication code.

The control code may be a code in which the authentication code and at least one additional code are combined; and the code control unit may identify location of the additional code in the control code through an additional code identifier further included in the control code or separately stored additional code identification information.

The electronic device may be a user-input device, receive the control code from a user through the code input unit, normally operate by the authentication code in the control code received by the electronic device, and perform the additional function corresponding to the additional code.

The electronic device may have a user lock code input function and may include at least one of a smartphone, a tablet, a computer, a banking terminal with a wired and wireless communication function capable of performing banking transactions, such as an ATM, and a household or automotive door lock.

The authentication code may be a code related to a security function of the electronic device, may perform a function related to locking/unlocking of the electronic device and a function related to login to the electronic device, and may be used for at least one of unlocking the electronic device, entry into a system, and program operation; and the additional operation of the additional code may execute the additional function corresponding to the additional code in addition to the normal operation corresponding to the authentication code, or may restrict execution of a predefined function among the normal operations corresponding to the authentication code or a predefined function among normal operations irrelevant to execution of the authentication code.

The electronic device may be a user-input device, include a communication unit exchanging information with an external system, receive the control code from a user through the code input unit, and transmit the control code to an external server to request that the service providing server perform the additional function corresponding to the additional code.

The electronic device may include at least one of a smartphone, a tablet, a computer, and a banking terminal with a wired and wireless communication function capable of performing banking transactions, such as an ATM; and the authentication code may be a code related to a security function of the service providing server, performs a function related to locking/unlocking of the service providing server and a function related to login to the service providing server, and may be used for at least one of entry into a system of a service providing server and program operation.

The additional code identifier may be an input identifier allowing the code control unit to identify the additional code in the control code, and may include at least one selected from location of the additional code in the control code, order, characteristics, size, and string length of the additional code.

The additional code identification information may include string length of the authentication code or specification information specifying start position of the additional code.

The code control unit may control an additional module to perform the additional function corresponding to the additional code when the authentication code of the control code is authenticated.

The control code may be composed of at least one of numerals, letters, figures, function keys, user biometrics, regions, patterns, sounds, gestures, and special symbols; and when the control code to be input is set in the form of a pattern, a pattern entered after a pattern corresponding to the authentication code, having a predefined number of points linked to one another, may be recognized as a pattern corresponding to the additional code.

The electronic device may be a service providing server having a user security code receiving function, the service providing server may include a code receiving unit receiving the control code which a user inputs to a user input electronic device, the service providing server may input the control code received by the code input unit to the code control unit, and the service providing server may perform an operation corresponding to the authentication code in the control code received by the code receiving unit and an additional operation corresponding to the additional code.

The service providing server may be a server that performs at least one of a banking service, a communication service, an Internet service, and a security service in association with the user input electronic device, and perform an additional operation corresponding to the received additional code.

The service providing server may include: a code extraction unit extracting the additional code from the control code received from the user input electronic device; and a code execution unit executing an additional operation corresponding to the additional code in the control code extracted by the cord extraction unit to perform functions corresponding to the respective codes.

The code execution unit may authenticate the authentication code of the control code to perform functions related to unlocking or login and perform additional functions corresponding to the additional code of the control code.

The electronic device may be a user input electronic device, include an information display unit displaying status of the electronic device and information processing results, and a communication unit allowing the electronic device to exchange information with an external system, and receive a security code from a user through the code input unit; the code control unit may determine whether the received security code is the authentication code or the control code, and, when the received security code is the control code, the code control unit may determine whether the control code is a dummy control code comprising an additional code having an additional function to masquerade as the authentication code, perform an operation corresponding to the authentication code, and display results thereof on the information display unit; and in execution of the additional function, the electronic device may notify a predetermined external response agency of occurrence of an emergency through the communication unit without any display on the information display unit, and display a dummy display corresponding to the additional code on the information display unit.

The electronic device may be a mobile device or a computer; the security code may be a login or unlock password of the electronic device; and the dummy display may be hiding at least one of one or more predetermined applications, icons, and folders from a screen.

The electronic device may be a mobile device or a computer; the security code may be a login password for receiving an online storage service or an email service remotely provided from outside of the electronic device; and the dummy display may be hiding at least one predetermined computer file or at least one predetermined received email from a screen.

The electronic device may be a banking device; the security code may be a password for performing at least one of account balance inquiry, account transfer, and cash withdrawal; and the dummy display may include at least one of displaying a preset balance instead of an actual balance, pretending to perform account transfer, and pretending that a user account has been frozen due to lack of funds.

The electronic device may be remotely controlled by a predetermined external response agency through the communication unit in execution of the additional operation, and remote control may include at least one of camera operation, voice recording, speaker operation, location confirmation, location tracking, and message transmission.

The code input unit may include at least one of a keypad, a touchscreen, a camera, a biometric data sensor, a microphone, and a dial; the security code entirely or partially may include numerals, letters, figures, function keys, biometrics, regions, patterns, sounds, gestures, and special symbols; and information displayed on the information display unit may be composed of at least one of an image, sound, vibration, smell, heat, and light.

The electronic device may further include a security camera capable of tracking and photographing a face of a current user of the electronic device, wherein, when the security code input to the code input unit is the control code, the security camera may be controlled to photograph a face of the user.

The predetermined external response agency may include at least one of a fire station, a police station, a security company, and a guardian.

The electronic device may be a user input electronic device, and may include an information display unit displaying status of the electronic device and information processing results, a communication unit allowing the electronic device to exchange information with an external system, and a mechanism for realizing physical movement of the electronic device in response to the received security code, the electronic device receiving a security code from a user through the code input unit; the code control unit may determine whether the received security code is the authentication code or the control code, and, when the received security code is the control code, the code control unit may determine whether the control code is a dummy control code including an additional code having an additional function to masquerade as the authentication code, allow the mechanism to perform an operation corresponding to the authentication code, and display results thereof on the information display unit; and, in execution of the additional function, the electronic device may notify a predetermined external response agency of occurrence of an emergency through the communication unit without any display on the information display unit, transmit an instruction to perform an operation corresponding to the dummy control code to at least one separate auxiliary device outside the electronic device, allow the mechanism to perform an operation corresponding to the authentication code, and display results thereof on the information display unit.

The electronic device may be a digital door lock; the at least one separate auxiliary device outside the electronic device may be an indoor light; and an additional operation on the auxiliary apparatus may be executed such that the indoor light does not light up even when a switch controlling on/off of the indoor light is ON.

The electronic device may be a digital door lock; the at least one separate auxiliary device outside the electronic device may be an indoor camera; and an additional operation on the auxiliary apparatus may be executed such that the camera photographs a space inside the door as soon as the door is opened.

The electronic device may be a digital door lock; the at least one separate auxiliary device outside the electronic device may be a recorder disposed inside a door; and, when the control code is input to the electronic device, an operation corresponding to the control code may be executed such that the recorder starts recording as soon as the door is opened.

The electronic device may be a user input electronic device, include an information display unit displaying status of the electronic device and information processing results, and a communication unit allowing the electronic device to exchange information with an external system, and receive a security code from a user through the code input unit; the code control unit may determine whether the received security code is the authentication code or the control code, and, when the received security code is the control code, the code control unit may determine whether the control code is a dummy control code including an additional code having an additional function to masquerade as the authentication code, and an operation corresponding to the authentication code may be executed such that the electronic device transmits the authentication code to a service providing server through the communication unit, receives results of information processing corresponding to the authentication code by the service providing server, and displays the results in the information display unit; and, in execution of the additional function, the electronic device may notify a predetermined external response agency of occurrence of an emergency through the communication unit without any display on the information display unit while performing an operation corresponding to the authentication code.

The electronic device may be a mobile device or a computer, and the security code may be a login password for receiving a service provided by a server outside the electronic device.

The electronic device may be a banking device; the security code may be a password for performing at least one of account balance inquiry, account transfer, and cash withdrawal; and the service providing server may be a server through which a banking institution provides an online service to a user.

The electronic device may be a user input electronic device, and may include: an information display unit displaying status of the electronic device and information processing results; and a communication unit allowing the electronic device to exchange information with an external system, the electronic device receiving a security code from a user through the code input unit; the code control unit may determine whether the received security code is the authentication code or the control code, and, when the received security code is the control code, the code control unit determines whether the control code is a dummy control code comprising an additional code having an additional function to masquerade as the authentication code, performs a normal operation corresponding to the authentication code, and displays results thereof on the information display unit; and in execution of the additional operation, the electronic device may notify a predetermined external response agency of occurrence of an emergency through the communication unit without any display on the information display unit while performing an operation corresponding to the authentication code.

The electronic device may be a mobile device or a computer, and the security code may be a login or unlock password of the electronic device.

The electronic device may further include a code input unit control module activating the code input unit according to a predetermined rule to await input of the security code by a user even after the authentication code is input to the code input unit, wherein the electronic device performs the additional function corresponding to input of the control code when the security code is not input during awaiting input.

The authentication code may include a plurality of authentication codes for different uses, the number of control codes may be the same as the number of authentication codes, and the control code may correspond to the authentication code in a one-to-one manner.

The control code may be composed of a combination of a transformation signal and the authentication code, and, when the authentication code combined with the transformation signal is input, the authentication code may allow the electronic device to perform both an operation corresponding to an authentication code not having the control code and an operation corresponding to the control code.

The transformation signal may include at least one of touch on the electronic device, impact, shaking, button pushing, and voice recognition.

The electronic device may wirelessly receive the transformation signal from a mobile device separate from the electronic device.

The electronic device may receive the control code all at once or receives the control code in sections by pretending to receive a separate code through a display module.

The electronic device may further include a user information control unit controlling an additional information module associated with additional information to acquire the additional information for performing the additional operation, wherein the additional information may include at least one of location of the electronic device, motion, tilt, photograph, fingerprint, and voice, and the additional information module may include at least one of a GPS module, a motion sensor, a tilt sensor, a camera, a fingerprint module, and a microphone.

The code control unit may analyze a structure of the control code to identify a combination of the authentication code, the additional code identifier, and the additional code; and the electronic device may further include a user information control unit collecting and processing location information of the electronic device and user personal information, and a central processing unit controlling the code input unit and the code control unit to control user authentication and execution of the additional function of the electronic device based on the control code.

In accordance with another aspect of the present invention, a transformation device used in a security system having a user security code input function, includes: an apparatus operating unit operable when a user is in an emergency; and a transformation communication unit wirelessly transmitting a transformation signal to a user electronic device upon operation of the apparatus operating unit, wherein the operation causing transmission of the transformation signal is at least one of touch on the transformation device, impact, shaking, button pushing, and voice recognition, the transmitted transformation signal is combined with an authentication code provided to the user electronic device to be switched into a control code for performing an additional operation of the user electronic device, and, when an authentication code is input to the user electronic device after transmission of the transformation signal, the authentication code allows the user electronic device to perform both an operation corresponding to an authentication code not having the control code and an operation corresponding to the control code.

In accordance with a further aspect of the present invention, there is a recording medium recording a control program for controlling an electronic device having a user security code input function, wherein the electronic device stores an authentication code, which is a security code allowing the electronic device to enter into a normal operation mode, and further stores, in addition to the authentication code, an additional code used in an additional situation, wherein, in response to instructions of the control program, a code control unit determines whether a security code received by a code input unit is the authentication code or a control code including the additional code, allows the electronic device to perform an operation corresponding to the authentication code when the security code received by the code input unit is the authentication code, while allowing the electronic device to perform an additional operation corresponding to the additional code when the security code is the control code including the additional code.

In accordance with yet another aspect of the present invention, there is a recording medium recording a control program for controlling an electronic device having a user security code input function, wherein the recording medium records a program by which the electronic device receives a security code from a user, displays status of the electronic device and information processing results, determines whether the received security code is an authentication code or a control code, when the received security code is the control code, determines whether the control code is a dummy control code including an additional code having an additional function to masquerade as the authentication code, exchanges information with an external system, when the received security code is the authentication code, performs an operation corresponding to the authentication code and displays results thereof, and, when the received security code is the dummy control code, notifies an external response agency of occurrence of an emergency without any display, and displays a dummy display corresponding to the additional code.

In accordance with yet another aspect of the present invention, a security system having a user security code input function, includes: a code input unit receiving a security code; a code storage unit storing an authentication code, which is a security code allowing the security system to enter into a normal operation mode, and a separate additional code used in an additional situation; and a code control unit determining whether a security code received by the code input unit is the authentication code or the control code, wherein the code control unit performs an operation corresponding to the authentication code when the security code received by the code input unit is the authentication code, whereas the code control unit performs an additional operation corresponding to the additional code in the control code when the security code received by the code input unit is the control code.

When the authentication code is stored outside the control code, the code control unit extracts the authentication code and authenticates the authentication code to execute an operation corresponding to the authentication code, and does not perform normal operation of the security system by the received control code alone without input of the authentication code, and when the control code includes the authentication code, the code control unit extracts the authentication code from the control code and performs authentication to execute an operation corresponding to the authentication code, and does not perform normal operation of the security system by the control code alone without input of the extracted authentication code.

In accordance with yet another aspect of the present invention, there is provided a system for controlling use of a user device using a code input method, wherein the user device includes at least one of a portable electronic device having a mobile communication function, such as a smartphone or a tablet; a banking terminal with a wired and wireless communication function capable of performing banking transactions, such as an ATM; a household or automotive door lock having a communication function; and an electronic device having a communication function and a user lock code input function.

The authentication code may be a code related to a security function of the user device or the service providing server and performs a function related to locking/unlocking of the user device or the service providing server and a function related to login.

In accordance with yet another aspect of the present invention, a security system having a user security code input function includes: an electronic device receiving a security code; and a predetermined external response agency capable of communicating with the electronic device by wire or wirelessly, wherein, when a security code received by the electronic device is an authentication code, the electronic device performs an operation corresponding to the authentication code and displays results thereof on an information display unit provided to the electronic device, and when a security code received by the electronic device is a control code and the control code is a dummy control code including an additional code having an additional function to masquerade as the authentication code, the electronic device notifies the external response agency of occurrence of an emergency without any display on the information display unit, and displays a dummy display corresponding to the additional code on the information display.

In accordance with yet another aspect of the present invention, there is a system for controlling use of a user device using a code input method used for a user device having a code input function and a communication function, wherein the user device stores a control code in which an authentication code, an additional code identifier and at least one of a plurality of additional codes are combined, and an additional function performed in response to the additional code, the user device performs the additional function corresponding to the additional code when the user device is unlocked by the authentication code of the control code received by the user device, and when the additional function is not executable by the user device itself, the user device transmits the control code to an external server communicatively connected to the user device to request that the service providing server execute the additional function.

In accordance with yet another aspect of the present invention, a method for responding to an additional situation using a security system having a user security code input function includes: storing an authentication code, which is a security code allowing an electronic device to enter into a normal operation mode, in the electronic device; storing an additional code used in an additional situation, separately from the authentication code; determining whether a security code received by a code input unit is the authentication code or a control code including the additional code; allowing, by a code control unit, the electronic device to perform an operation corresponding to the authentication code when the security code received by the code input unit is the authentication code, and allowing, by the code control unit, the electronic device to perform an additional operation corresponding to the additional code in the control code when the security code received by the code input unit is the control code.

In accordance with yet another aspect of the present invention, a method for responding to an emergency situation using a security system having a user security code input function includes: receiving, by an electronic device, a security code; determining whether the security code received by the electronic device is an authentication code or a control code; when the received security code is the control code, determining whether the control code is a dummy control code including an additional code having an additional function to masquerade as the authentication code; when the received security code is the authentication code, performing, by the electronic device, an operation corresponding to the authentication code and displaying results thereof on an information display unit provided to the electronic device; and when the received security code is the dummy control code, notifying, by the electronic device, a predetermined external response agency of occurrence of an emergency by wire or wirelessly without any display on the information display unit and displaying a dummy display corresponding to the additional code on the information display unit.

In accordance with yet another aspect of the present invention, a method for responding to an emergency situation using a security system having a user security code input function, includes: receiving, by an electronic device, a security code; determining whether the received security code is an authentication code or a control code; when the received security code is an authentication code, operating, by the electronic device, a mechanism provided to the electronic device in response to the authentication code and displaying results thereof on an information display unit; and when the received security code is the control code and the control code includes an additional code having an additional function to masquerade as the authentication code, notifying, by the electronic device, a predetermined external response agency of occurrence of an emergency without any display on the information display unit, transmitting an instruction to perform an operation corresponding to the control code to at least one auxiliary apparatus, allowing the mechanism to perform an operation corresponding to the authentication code, and displaying results thereof on the information display unit.

In accordance with yet another aspect of the present invention, a method for responding to an emergency situation using a security system having a user security code input function, includes: receiving, by a user device, a security code; when the received security code is an authentication code, transmitting, by the user device, the authentication code to a service providing server and receiving results of information processing corresponding to the authentication code performed by the service providing server and displaying the results on an information display unit provided to the user device; and when the received security code is the control code and the control code includes an additional code having an additional function to masquerade as the authentication code, transmitting, by the user device, the authentication code to the service providing server and receiving results of information processing corresponding to the authentication code performed by the service providing server and displaying the results on the information display unit provided to the user device, and notifying a predetermined external response agency of occurrence of an emergency without any display on the information display unit.

In accordance with yet another aspect of the present invention, a method of controlling use of a device using a code input method which is used for a user device having a code input function and a communication function, includes: receiving, by the user device, a control code in which an authentication code, an additional code identifier, and at least one of a plurality of additional codes are combined; analyzing, by the user device, the received control code; and authenticating the authentication code of the control code to unlock the user device, and, when the user device is unlocked, performing, by the user device, an additional function corresponding to the additional code of the control code.

The method of controlling use of a device using a code input method may further include, when the additional function corresponding to the additional code of the control code is not executable by the user device itself after the user device is unlocked, transmitting the control code to an external server connected to the user device to request that the service providing server execute the additional function.

The method of controlling use of a device using a code input method may include: receiving, by the service providing server requested to execute the additional function, the control code from the user device; extracting an additional code relevant to a specific function or service from the received control code; and performing the additional function corresponding to the additional code extracted from the control code.

In the method of controlling use of a device using a code input method, in performing, by the user device itself, an additional function, when a meaningless numeral, letter, or special character, which is not registered as the additional code, is input to an additional code section, only a function corresponding to the authentication code of the control code is performed.

In the method of controlling use of a device using a code input method, the control code may include at least one of additional codes set corresponding to a function for user convenience and a function for reporting an emergency.

### [Advantageous Effects]

Using a code input method of combining an authentication code and an additional code, the system, apparatus and method according to the present invention allow a security function, which is an original function, and an additional function for user convenience to be simultaneously performed, thereby improving user convenience and security, when a user wants to use functions or services of various user electronic devices such as a smartphone, a mobile device, a computer, a banking terminal, and an electronic door device.

In addition, the present invention provides a security system, apparatus, and method in which, when a user is threatened by a criminal or is in security-related danger, the user inputs a dummy control code to a mobile device, a banking device such as an ATM, or other user devices using a user security code input method to allow the user device to confidentially notify an external response agency of an emergency situation while operating normally, thereby effectively dealing with criminal activities.

Further, according to the present invention, when a user inputs a dummy control code to a user device, the user device displays a dummy display to make it appear that the user device normally operates to deceive a criminal, thereby allowing easy recovery of damages after an emergency.

### [Description of Drawings]

Fig. 1 is a view of a security system using a control code according to one embodiment of the present invention.
Fig. 2 is a block diagram of a user device according to one embodiment of the present invention.
Fig. 3 is a view comparing a normal display and a dummy display of a banking device (user device) according to one embodiment of the present invention.
Fig. 4 is a view comparing a normal display when an authentication code is input to a computer (user device) as a login password and a dummy display when a control code is input, according to one embodiment of the present invention.
Fig. 5 is a view comparing a normal display when an authentication code is input to a computer (user device) as a login password of an email service and a dummy display when a control code is input, according to one embodiment of the present invention.
Fig. 6 shows a situation in which, when a control code is input to a digital door lock (user device), the user device cooperates with several indoor apparatuses to block a criminal's goal while unlocking a door, according to one embodiment of the present invention.
Fig. 7 is a flowchart showing control steps in an emergency reporting method using a control code according to one embodiment of the present invention.
Fig. 8 is a flowchart showing control steps in an emergency reporting method using a control code according to one embodiment of the present invention.
Fig. 9 shows a configuration of a control code and function of the control code as a login password of a computer, according to one embodiment of the present invention.
Fig. 10 is a view of an authentication code (authentication pattern) and a control code (control pattern), as an unlock pattern of a smartphone, according to one embodiment of the present invention.
Fig. 11 is a flowchart showing control steps performed by a service providing server according to one embodiment of the present invention.
Fig. 12 is a flowchart illustrating a method for controlling use of a device using a control code according to one embodiment of the present invention.
Fig. 13 is a view of a banking service system using a transformation device and a flowchart showing an operation method thereof, according to one embodiment of the present invention.
Fig. 14 is a view of a digital door lock system using a transformation device and a flowchart showing a method thereof, according to one embodiment of the present invention.

### [Best Mode]

Hereinafter, embodiments of the present invention will be described in detail with reference to the accompanying drawings.

It should be understood that terms related to components of embodiments can be name by different terms performing substantially the same functions. In addition, the terms used herein are defined by taking functions of the present invention into account and can be changed according to user or operator custom or intention. Therefore, definition of the terms should be made according to the overall disclosure set forth herein.

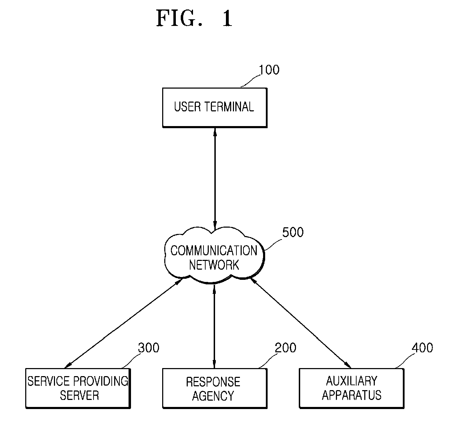

Fig. 1 is a conceptual view of a security system using a security code according to one embodiment of the present invention, which includes a user electronic device or user device 100 (hereinafter, referred to as "user device") receiving a security code from a user, a response agency 200, a service providing server 300, an auxiliary apparatus 400, and a communication network 500.

The service providing server 300 or the auxiliary apparatus 400 may be excluded from the security system depending upon use of the security code.

The security code is divided into an authentication code and a control code. The authentication code refers to a password or secret code for user authentication which allows a user to obtain user authentication of the user device 100 or to use a service provided by the service providing server 300. The control code is a security code which is set by a user separately from the authentication code, and includes an additional code for further performing additional operations or functions other than user authentication. When the additional operations or functions are aimed at deceiving a criminal threatening a user, the control code may particularly be referred to as a dummy code. The control code may include the authentication code and the additional code, or may include only the additional code. In this embodiment, the present invention is described by way of example wherein the control code functions as the additional code, and, in an additional operation corresponding to the control code, a predetermined response agency 200 is notified of a user emergency situation.

The user device 100 is an apparatus to which the security code can be input through direct user manipulation.

The response agency 200 refers to the other party that can receive a report or notification of an emergency situation, which is sent from a user using the control code, and properly respond thereto. The response agency 200 is an agency predetermined by a user, and may include various institutions such as a police station, a fire station, and the like. Alternatively, a person such as a guardian of a user may be designated as the response agency 220. In addition, the response agency 200 may include one or multiple response agencies.

The service providing server 300 is a system server that provides services that a user wants to receive, and may be, for example, a server of a company or system thereof that provides email services or Internet storage services.

The auxiliary apparatus 400 is an apparatus separate from the user device 100, and refers to an apparatus which is notified of occurrence of an emergency from the user device 100 in response to the control code input to the user device 100 and foils criminal goals or acquires surrounding information around a user or a criminal.

The communication network 500 collectively refers to communication networks which allow the user device 100, the response agency 200, the service providing server 300, and the auxiliary apparatus 400 to send/receive messages or signals to/from one another and to be operatively connected to one another. The communication network 500 may be composed of various communication means including: wireless communication means such as CDMA, WCDMA, LTE, LTE-A, WiBro, and Wi-Fi; wired communication means such as Ethernet, cable, and LAN; and wired/wireless communication means.

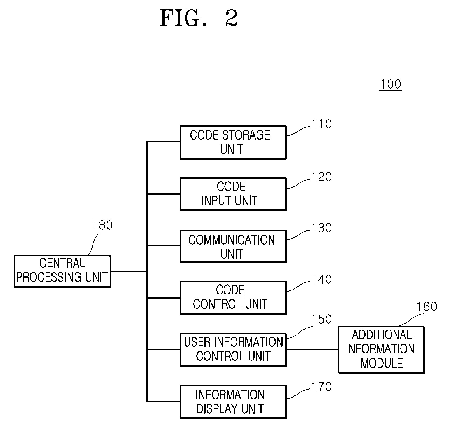

Fig. 2 is a block diagram of a user device 100 according to one embodiment of the present invention, which is an electronic device. The user device includes a code storage unit 110, a code input unit 120, a communication unit 130, a code control unit 140, an information control unit 150, an additional information module 160, an information display unit 170, and a central processing unit 180.

The code storage unit 110 stores the authentication code and the additional code.

The code input unit 120 serves to receive the security code from a user and may include various means such as a keypad, a touchscreen, a camera, a biometric data sensor, a microphone, and a dial, which may be used alone or in combination thereof.

The information display unit 170 displays operation information of the user device 100. A user acquires information on condition and operation results of the user device 100 through the information display unit 170. The information display unit 170 may include a display, a speaker, an LED, and the like. In addition, information displayed on the information display unit 170 is not particularly limited so long as the information can be understood by a user, and may be in the form of an image, sound, vibration, smell, heat, light, and the like.

The code control unit 140 serves to compare a received security code with the authentication code and the additional code stored in the code storage unit 110 in response to the security code input by a user and determine whether the security code received from the user is the authentication code or the control code.

The additional information module 160 is a module acquiring information on the user device 100 or information around the user device 100. Representative examples of the additional information module 160 may include a GPS module, a motion sensor, a tilt sensor, a camera, a fingerprint module, and a microphone. When the security code received by the user device 100 is the control code, the user device 100 may also control operation of the additional module 160 through the user information control unit 150, thereby executing the additional operation.

The communication unit 130 is connected to the communication network 500 to control communication between the user device 100 and all systems or apparatuses external to the user device 100.

The central processing unit 180 centrally controls and interworks with all components of the user device 100 and controls user authentication and execution of an additional function of the user device 100.

Hereinafter, one embodiment of the present invention wherein the user device is a banking device 600, and reporting an emergency and displaying a dummy display are set as additional operations corresponding to the dummy control code will be described with reference to the accompanying drawings.

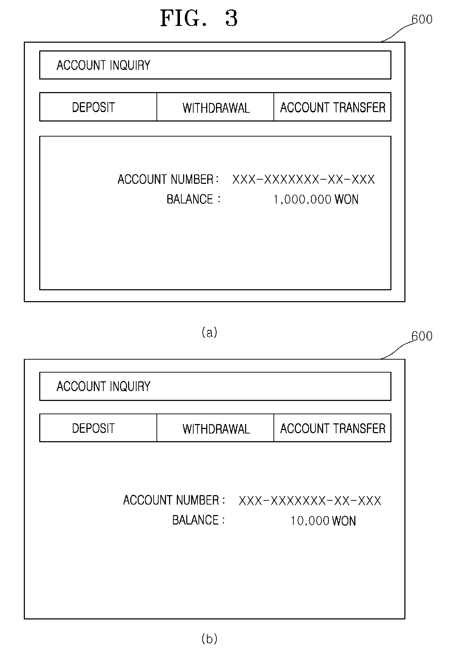

Fig. 3(a) is a view showing a normal inquiry result displayed on a screen of the banking device when a normal user inputs an authentication code for checking an account to the banking device 600. On the other hand, Fig. 3(b) is a view showing a dummy display displayed on the screen when a criminal or a user threatened by a criminal inputs a dummy control code including an additional code having an additional function to masquerade as an authentication code into the banking device 600 as a code for checking account. If a dummy control code for checking an account is input to the banking device 600, the dummy control code is transmitted to an online service server (not shown) of a relevant banking institution, which is a service providing system. Here, the dummy control code may be configured as a dummy code which has the same format as a normal authentication code but is different from a normal authentication code. The online service server recognizes that the received security code is the dummy control code for checking an account and transmits a very small amount of virtual account balance information preset by a user to the banking device 600. The banking device 600 displays the virtual account balance information. Thus, it is expected that a criminal threatening a user to obtain account balance information will consider the virtual account balance as an actual account balance and run away, giving up on the idea of withdrawing money. In addition to account inquiry, for account transfer, it is possible to display fake account transfer on a screen of the banking device 600 without conducting an actual account transfer such that a criminal believes account transfer has been performed.

Next, one embodiment of the dummy control code wherein the user device is a computer 700, the security code is a login password of the computer 700, and reporting an emergency and displaying a dummy display are set as additional operations corresponding to the control code will be described with reference to the accompanying drawings.

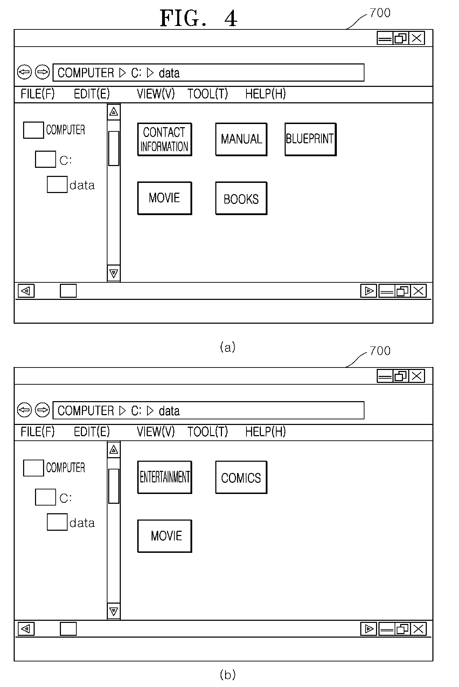

Fig. 4(a) is a view showing a normal search result displayed on a screen of the computer 500 during file search when a user inputs a login authentication code to the computer 700, which is the user device. On the other hand, Fig. 4(b) shows a screen on which a dummy display is displayed as a result of file search when a user inputs a dummy control code as a login password to the computer. Although Fig. 4(b) shows an example wherein some of folders are hidden or a folder name is changed, it should be understood that icons or files may be hidden or name of icons or files may be changed. When external service provision is not required as in computer login, the user device may generate and display a dummy display.

Next, one embodiment of the present invention wherein the user device is a computer 700, the security code is a password for using an email service, and reporting an emergency and displaying a dummy display are set as additional operations corresponding to the dummy control code will be described with reference to the accompanying drawings.

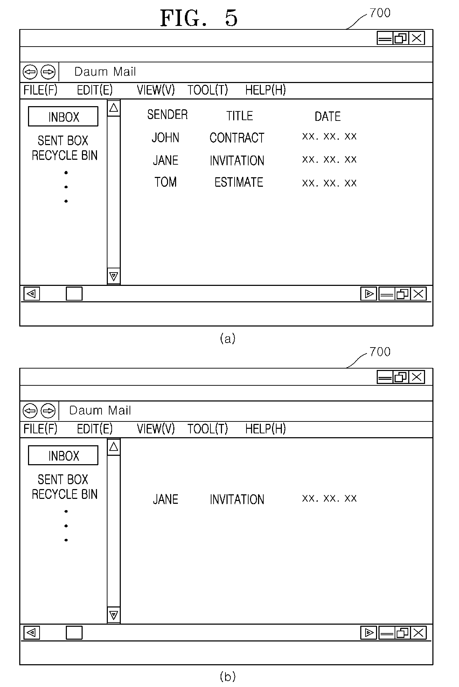

Fig. 5(a) is a view showing a normal received mail list displayed on a screen when a user inputs an authentication code, as a login password of an email service, to the computer 700 through the communication network 500. On the other hand, Fig. 5(b) is a dummy display screen on which important e-mails predetermined by a user are hidden from a list when a user inputs a dummy control code as a login password of an email service. When external service provision is necessary as in an email service, virtual data for a dummy display is required to be delivered to the user device from an external server so as to use a dummy display function. Thus, the control code input to the computer 700 of a user is required to be transmitted to an email server (not shown) in order for the email server to deliver the virtual data for a dummy display to the computer 700 of a user. In this case, operation of reporting an emergency to the response agency 200 may be performed not only by the computer 700, which is the user device, but also by the email server. If a server outside the user device does not support a virtual data delivery function, the user device does not need to transmit the control code to the service providing server. In this case, when the control code is input to the user device, the user device transmits the authentication code to the service providing server to allow the service providing server to normally provide a service, and the user device alone may report an emergency to the response agency. In addition, even when an external service provision system does not support a virtual data delivery function, the code control unit of the user device may display a virtual dummy display on the information display unit, whereby the user device itself can implement a virtual dummy display.

Next, one embodiment of the present invention wherein the user device is a digital door lock 800, the security code is an unlock password of the digital door lock 800, and reporting an emergency and operating the auxiliary apparatus are set as additional operations corresponding to the control code will be described with reference to the accompanying drawings.

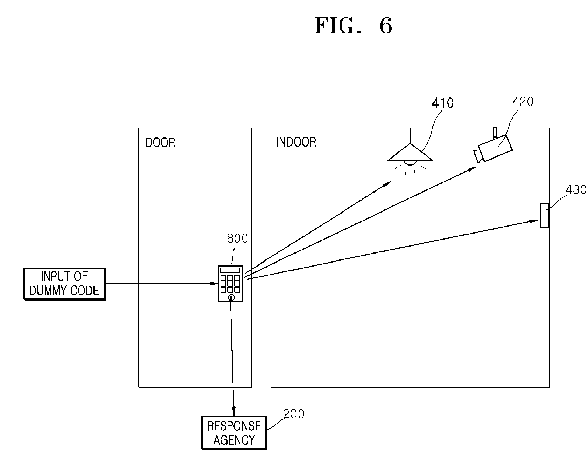

Fig. 6 shows a situation wherein, when the dummy control code is input to the digital door lock 800, the digital door lock 800, which is the user device, performs an unlock operation, reports an emergency to the response agency 200, and transmits a signal instructing to perform an operation corresponding to an emergency situation to an indoor light 410, a camera 420, and a recorder 430, which are the auxiliary apparatus 400. Even when the dummy control code is input, the digital door lock 800 must perform the same normal operation (unlocking) as that performed when the authentication code is input in order to deceive a criminal. In addition, the digital door lock 800 does not require an external server in execution of unlocking. Thus, for a user device with features similar to the digital door lock 800, when the dummy control code is input to the user device, the user device itself must report occurrence of an emergency to the response agency 200. The digital door lock 800 may be operatively connected to several indoor auxiliary apparatuses 400, for example, an indoor light 410, a camera 420, and a recorder 430 to foil criminal plans without a criminal being aware thereof. For example, as shown in Fig. 6, when the control code is input to the digital door lock 800, on the one hand, the central processing unit of the digital door lock 800 recognizes an emergency and reports occurrence of an emergency to the response agency 200, and, on the other hand, transmits an instruction to remain in an off-state regardless of switch operation to the indoor light 410, which is the auxiliary apparatus 400, thereby interrupting criminal's indoor activities. In addition, the digital door lock 800 may instruct the camera 420 and the recorder 430 to record criminal activity and voice, thereby collecting data for arresting the criminal later. In addition to the digital door lock 800, any user device which receives a security code to perform user authentication and has a communication function, such as a computer, a smartphone, and the like, may be operatively connected to the auxiliary apparatus 400.

Next, one embodiment of a method in which a user reports an emergency by inputting a control code will be described with reference to the accompanying drawings.

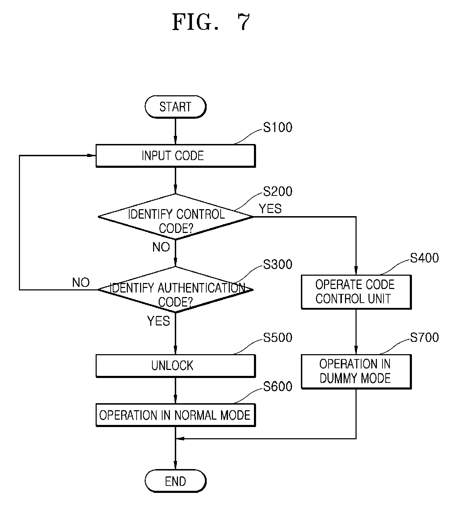

Fig. 7 is a flowchart illustrating a method of reporting an emergency using a control code according to one embodiment of the present invention.

Referring to Fig. 7, the method of reporting an emergency using a control code according to one embodiment includes a code input step (S100), a first determination step (S200), a second determination step (S300), a control step (S400), an unlocking step (S500), a step of operating in a normal mode (S600), and a step of operating in a dummy mode (S700).

In the code input step (S100), a security code is received by the code input unit 120 of the user device 100. Here, a user is normally authenticated through input of an authentication code, but may input a predetermined control code when it is necessary to deceive a criminal under threat of the criminal or in an emergency.

In the first determination step (S200), whether the security code input in the input step (S100) is the control code is determined by the code control unit 140.

In the second determination step (S300), when the input security code is determined not to be the control code in the first determination step (S200), the process proceeds to the unlocking step (S500) if the input security code is an authentication code formally registered in the user device 100, whereas the process returns to the user code input step (S100) such that the security code may be input again if the input security code is not the authentication code. As used herein, "unlocking" means execution of operation in the normal mode.

The first determination step (S200) and the second determination step (S300) are sequentially described to properly describe this embodiment, and thus may actually be simultaneously performed or in a different order. Therefore, the order thereof does not affect the present invention.

The control step (S400) is performed when the input security code is determined to be the control code in comparison of the input security code with the authentication code and the additional code stored in the code storage unit 110 in the first determination step (S200).

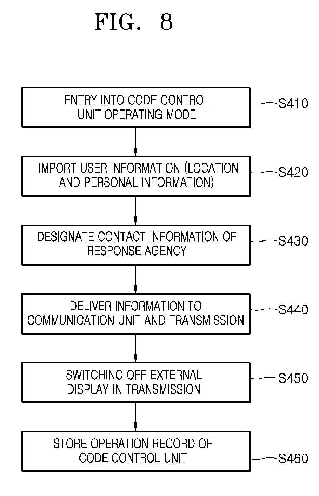

Fig. 8 is a flowchart illustrating an emergency control step of the method of reporting an emergency using a control code as shown in Fig. 7.

The emergency control step (S400) will now be described in detail with reference to Fig. 8. In the emergency control step (S400), the code control unit 140 enters into code control unit 140 operation mode preparing to operate an internal process for communication with the response agency 200 (S410) upon determining that a user in an emergency situation inputs the control code to notify the response agency 200.

In the emergency control step (S400), the code control unit 140 imports information such as the current position of the user device or users' personal code and a message corresponding to the additional code in the control code stored in the code control unit 140 from the additional information module 160 (S420).

In the emergency control step (S400), the code control unit 140 specifies other information such as contact information of the response agency 200 including phone number, Internet address, and the like, corresponding to the additional code stored in the code control unit 140 (S430).

In the emergency control step (S400), the code control unit 140 transmits the user information and the contact information of the response agency 200 to the communication unit 130 through the central processing unit 180 and instructs the communication unit 130 to send an emergency signal (S440).

In the emergency control step (S400), the code control unit 140 switches off all external displays generally used by the user device 100 in transmission of signals (S450), when sending the emergency signal corresponding to the control code. This has an effect of ensuring that a criminal only recognizes operation in the normal mode upon transmission of the emergency signal corresponding to the control code. Generally, the external displays used by the user device 100 in transmission of signals refer to all external displays operable in connection of the user device 100 to a network, such as an audio display including ring tone or ring back tone and a video display including LED displays.

In the emergency control step (S400), the code control unit 140 stores data on all records of operation of the code control unit 140 in the code control unit 140 (S460), wherein the records are internally generated when the code control unit 140 transmits the emergency signal and operates in dummy mode.

A series of processes caused by input of the control code are achieved in a short time almost indistinguishable from the time required for unlocking operation caused by input of the authentication code.

The step of operating in the normal mode (S600) refers to a process in which the user device normally operates after unlocking due to the authentication code.

The step of operating in the dummy mode (S700) refers to a process in which normal operation is performed although the user device responds to an emergency. As a result, a user uses the control code in an emergency or during a crime thereby more actively coping with an emergency or crime while normally using the user device 100.

In this embodiment, although the step of operating in the dummy mode (S700) is a process in which, due to the control code, the user device 100 operates in the same manner as when the authentication code is input and transmits an emergency signal without any external display, the step of operating in the dummy mode is a process in which the user device 100 displays a dummy display while transmitting an emergency signal.

Next, one embodiment of configuration of an authentication code and a control code and a system and method of controlling use of a device based on the configuration of an authentication code and a control code, according to the present invention, will be described with reference to the accompanying drawings.

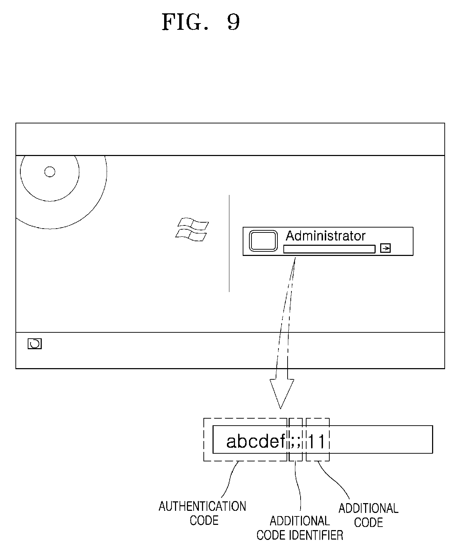

The code control unit 140 of the user device 100 analyzes a structure of a user lock code (or security code) received through the code input unit 120 and identifies a combination of an authentication code, an additional code identifier, and an additional code (or additional execution code) (see Fig. 9).

The authentication code is a code for performing a security function and performs a function to remove restriction on use of the user device 100; the additional code identifier is a code indicative of the presence of the additional code (or additional execution code) after the authentication code; and the additional code (or additional execution code) is a code instructing to perform an additional function of the user device 100. However, in this embodiment, the authentication code must be authenticated as a code normally registered in the user device 100 in order to perform the additional function.

The additional code identifier indicates that, when two consecutive special characters (for example, *, #, $, @, etc.) are present after the authentication code, a code after the additional code identifier is the additional code (or additional execution code).

However, the additional code identifier is not necessarily a special character, and may be symbols such as a predetermined number of numerals or characters. The additional code identifier is non-essential and may be omitted. If the number of symbols of the authentication code is fixed (for example, a four-digit number), a code input after the authentication code may be an additional execution code.

The code control unit 140 generates and registers the authentication code, the additional code identifier, and the additional code (or additional execution code).

In this embodiment, a combination of the authentication code, the additional code identifier, and the additional code (or additional execution code) is referred to as the control code.

Thus, the control code is not a separate code, but one code input consecutively. However, depending upon the kind of user device 100, it is possible to display that the control code is separately input as an individual code by controlling a display module (i.e. a display unit displaying input of the control code) (not shown).

For example, assuming that the control code is an eight-digit code and the user device 100 is a banking terminal, a display module ( a display unit) of the banking terminal for receiving and displaying a password (i.e. the control code herein) generally receives a four-digit number and thus may display that receiving the control code four digits at a time since the display module (by way of example, once the first four-digit code is input, the display module may display a message "Please reenter your password" to receive the remaining second four-digit code).

It should be understood that the control code may be input consecutively all at once without being divided when a user logins to an Internet electronic device (for example, a computer) or an Internet homepage (for example, www.naver.com, www.daum.net, etc.). In other words, when the number of symbols that can be input at once is not limited, the control code may be input all at once regardless of the number of symbols constituting the control code, as shown in Fig. 9.

In this embodiment, when security authentication is achieved by inputting the control code, the additional function corresponding to the additional code (or additional execution code) is performed while restriction on use of the user device 100 is removed.

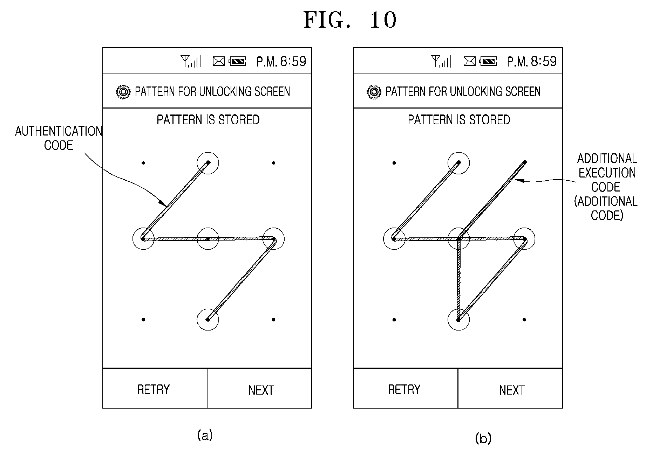

Here, the control code may be implemented as numerals, characters, and special symbols, and may also be implemented as a pattern, as shown in Fig. 10.

Fig. 10(a) is a view illustrating the authentication code (pattern), and Fig. 10(b) is a view illustrating the additional execution code (pattern) in addition to the authentication code (pattern). When the control code is implemented as a pattern as above, the additional code identifier may be omitted. If the number of points of the authentication code (pattern) is fixed (for example, five points), a pattern input after the authentication code (pattern) may be recognized as the additional execution code.

The code control unit 140 may generate and store an additional function (or additional module) to be controlled corresponding to the additional execution code (pattern) and a message that a user wants to deliver. In addition, the code control unit 140 may store contact information of the service providing server 300 (for example, an Internet address) so as to request that the service providing server 300 perform specific functions or services corresponding to the additional execution code (pattern) of the control code.

When the additional function to be performed corresponding to the additional execution code of the control code is executable by the user device 100, the user device 100 performs the additional function.

However, when the additional function to be performed corresponding to the additional execution code is not executable by the user device 100 alone, the code control unit controls the communication unit 130 to request that the service providing server 300 perform the additional function.

Here, the user device 100 may further transfer additional information (for example, a position, a photograph, an image, a fingerprint, sound, etc.) to request that the service providing server 300 perform the additional function. Here, the user device 100 may control a relevant additional information module (for example, a GPS module, a camera, a fingerprint module, a microphone, etc.) to acquire the additional information.

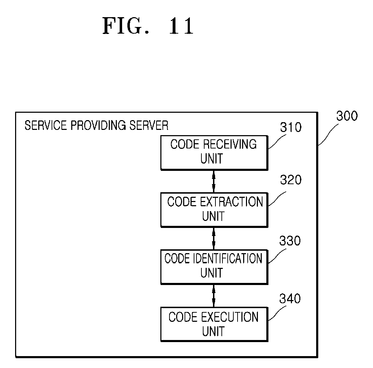

Fig. 11 is a flowchart illustrating operation of the service providing server 300.

In the service providing server 300, the code receiving unit 310 receives the authentication code or the control code from the user device 100.

The code extraction unit 320 (or central processing unit) extracts an additional code (or additional execution code) related to execution of specific additional functions or services from the control code received from the user device 100.

The code identification unit 330 (or central processing unit) identifies an additional function corresponding to the additional code (or additional execution code), and the code execution unit (340) (or central processing unit) executes an additional process (i.e. a process of executing an additional function or service) corresponding to the additional code (or additional execution code), thereby performing the additional function (service).

For example, assuming that the service providing server 300 is an Internet server (for example, Naver, Daum, etc.), the code identification unit 330 (or central processing unit) identifies the authentication code in the control code to perform login and then identifies the additional code (or additional execution code) in the control code to immediately perform a function corresponding thereto (for example, a user-defined function such as e-mail, entry into a café, entry into a blog).

Here, even when the service providing server 300 is a server related to other functions (for example, a banking service server, a communication service server, an Internet service server, a security service server, etc.), the method of controlling user authentication and execution of the additional function using the control code according to this embodiment is applicable in the same manner as in the above embodiment although kinds of an additional function or service performed by execution of the additional process may be changed.

Further, it is also possible that the user device 100 reports an emergency to the response agency 200 without any display on the information display unit 170 while performing normal operation corresponding to the authentication code, when a user inputs the authentication code to the user device after performing a predetermined operation other than input of the security code, such as pressing a button of the user device 100 although a user does not input the control code to the user device 100. Here, a combination of transformation signals transmitted to the user device and an authentication code input to the user device allows the authentication code to be transformed into a control code having an additional function. The authentication code transformed into the control code performs both an operation corresponding to an authentication code not having a control code and an operation corresponding to the control code. In addition, when a transformation device (not shown), which is a portable device separate from the user device, is manipulated to send a transformation signal and the user device having received the transformation signal through the communication network 500 receives the authentication code, it is possible to perform a function of the control code including the additional code having a function of allowing the user device to report an emergency situation to the response agency 200 without any display on the information display unit 170 while performing normal operation corresponding to the authentication code. Next, one embodiment of a system and method using a control code generated with the help of the transformation device will be described with reference to the accompanying drawings.

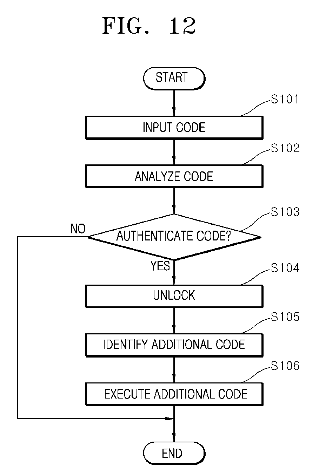

Fig. 12 is a flowchart illustrating a method for controlling use of a device using a control code according to one embodiment of the present invention.

Referring to Fig. 12, a method of controlling use of a device using a code input system according to this embodiment includes a code input step (S101), a code analysis step (S102), a code authentication step (S103), an unlocking step (S104), an additional code identification step (S105), and an additional code execution step (S106).

In the code input step (S101), a control code is input through the code input unit 10 of the user device 100.

The control code refers to a code in which an authentication code, an additional code identifier, and at least one of a plurality of additional codes are combined with one another. In other words, a combination of the codes is formed as a single control code. For a control code including the authentication code, the authentication code of the control code must be authenticated as a normal code in order to execute an additional function corresponding to the additional code.

When a meaningless code (i.e. meaningless numerals, letters, or special characters, which are not registered as the additional code) is input to an additional code section of the control code, only a function corresponding to the authentication code (for example, unlocking) is performed.

Thus, a user usually inputs a meaningless code into an additional code portion of the control code such that only unlocking of the user device 100 is performed, whereas, if a specific additional function is required to be performed, the user may input an additional code set corresponding to the specific additional function (for example, a function for user convenience, a functions to report an emergency situation, etc.).

In the code analysis step (S102), a combination of the control code input in the code input step (S101) is analyzed.

In other words, an authentication code section of the control code is analyzed and separated, and whether an additional code section is added to the control code is analyzed. Here, addition of the additional code section may be determined through the additional code identifier, or may be determined based on the number of symbols of the input authentication code when the number of code symbols that can be input in the authentication code section is fixed.

In the code authentication step (S103), whether the authentication code section of the control code analyzed in the code analysis step (S102) is a normal code is determined. In other words, whether the authentication code section is normal is verified.

In the unlocking step (S104), the user device 100 is unlocked when the authentication code section of the control code is determined to be a normal code.

When the user device is unlocked, the user device 100 may be controlled by a user.

An additional code identification step (S105) is performed in the background when the user device is unlocked, and is a process of identifying an additional function corresponding to the additional code. Here, the number of usable additional codes and an additional function corresponding to the additional code may vary depending upon kind of the user device 100 or a user.

In the additional code execution step (S106), a function or service corresponding to the additional code identified in the additional code identification step (S105) is performed.

Here, when a function or service corresponding to the additional code is executable by the user device 100 itself, a relevant additional function (or additional module) is directly controlled to perform the function or service, whereas, when a function or service corresponding to the additional code is not executable by the user device 100 alone, the service providing server 300 is requested to perform the function or service.

If an additional function to restrict some functions of the user device 100 is set in the additional code, the restricted functions cannot be used even when the user device 100 is unlocked. Assuming that the user device 100 is a smartphone and an additional function set in the additional code is a function to restrict display of a phone number list, a phone number list-display function is restricted even when the smartphone is unlocked.

As described above, using the additional code of the control code, the system and method according to this embodiment allows a predetermined additional function to be performed, or allows a predetermined function among normal operations corresponding to an authentication code or a predetermined function among normal operations irrelevant to execution of the authentication code to be restricted while unlocking the user device 100.

Here, the additional function may be a function to report an emergency. In this case, a user can naturally report an emergency situation to a specific agency (for example, a police station, a service administrator, a bank, a service manager, etc.) without a criminal being aware thereof while complying with the criminal's demands (i.e. unlocking the user device), and can keep important functions in a locked state to foil a criminal's goal, thereby minimizing damage to the user.

Here, it should be understood that, although the additional functions applied to the user device 100 can vary according to whether the user device is an electronic device (for example, an electronic device with Internet connectivity, such as a computer), a banking terminal (an electronic device capable of performing banking functions, such as an ATM), or an electronic door device (for example, an electronic device capable of restricting entry into a vehicle or an office, such as a door lock), various modifications and changes thereto can be made by those skilled in the art without departing from the spirit and scope of the invention.

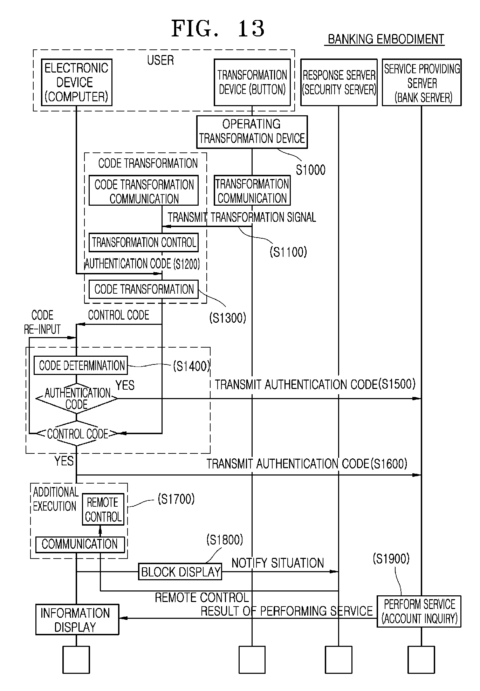

Fig. 13 is a flowchart illustrating an operation process of a banking service system assuming that a criminal threatens a user to obtain an authentication code, which is a secret code for banking, and then tries to access a bank server and receive a banking service through a computer.

Referring to Fig. 13, the banking service system according to this embodiment includes: a user device (computer, electronic device) into which a user inputs a security code to receive a banking service; a transformation device by which a user threatened by a criminal can transmit a transformation signal to the user device (computer, electronic device) through a simple operation such as pressing a button; a response server (security server) which is notified that a user is in an emergency situation from the user device (computer, electronic device, etc.) and takes measures in response thereto; and a service providing server (bank server) providing a banking service to a user.

As shown in Fig. 13, if a user leaks an authentication code when threatened by a criminal, the user operates the transformation device (S1000) to wirelessly send a predetermined transformation signal to the user device (computer) predetermined by the user (S 1100). For convenience of description, in this embodiment, the transformation signal is assumed to be received by the user device (computer) before the criminal inputs the authentication code to the user device (computer).

When the criminal inputs the authentication code, which the criminal has gained by threatening the user, into the user device (computer) (S1200), a code transformation module (not shown) of the user device (computer) identifies whether the user device receives the transformation signal from the transformation device. If the user device has received the transformation signal, the code transformation module transforms the authentication code input by the criminal into a control code corresponding to the authentication code (S1300) and transmits the control code to a code processing module (not shown).

The code processing module (not shown) determines whether a security code received from the code transformation module is an authentication code or a control code (S1400), and, if the received security code is an authentication code, transmits the authentication code to the service providing server (bank server) without change (S1500).

In this embodiment, the authentication code is switched to a control code through operation of the transformation device, and the authentication code may be recognized as a control code or an authentication code by the user device.

If the security code received from the code transformation module is a control code, the code processing module transmits a previously input authentication code to the service providing server (bank server) (S1600) and performs an additional function corresponding to the control code (S1700). In this embodiment, notifying the response server (security server) of the fact that a user is in danger is set as execution of the additional function.

When a criminal is aware of execution of the additional function, i.e. the function of notifying the response server (security server) of an emergency situation, it is difficult to ensure safety of the user. Thus, it is desirable that any display relevant to execution of the additional function be blocked (S1800).

Even when a user operates the transformation device to send the transformation signal, the service providing server (bank server) receives an authentication code and performs a service corresponding thereto (S1900), and results thereof are displayed on the user device (computer).

In addition, execution of the additional function may be a more active method wherein a predetermined external response agency controls the user device, for example, in the manner of remote tracking through the communication unit to allow a user to be out of danger. Here, examples of remote control may include operation of a camera, voice recording, operation of a speaker, location confirmation, location tracking, and message transmission.

Next, one embodiment of a digital door lock system and method using a control code generated with the help of the transformation device will be described with reference to the accompanying drawings.

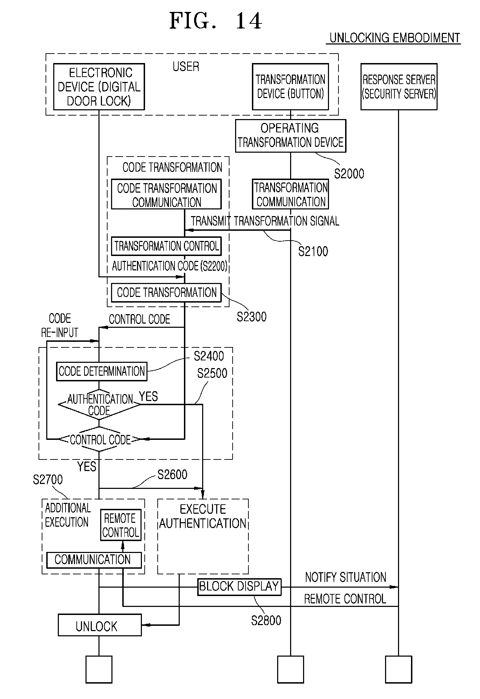

Fig. 14 is a flowchart illustrating an operation process of a digital door lock system assuming that a criminal threatens a user to obtain an authentication code, which is an unlock code of a digital door lock, then tries to unlock the digital door lock and invade a room.

Referring to Fig. 14, the digital door lock system according to this embodiment includes: a user device (digital door lock, electronic device); a transformation device by which a user when threatened by a criminal can transmit a transformation signal to the user device (digital door lock, electronic device) through a simple operation such as pressing a button; and a response server (security server) which is notified that a user is in an emergency situation from the user device (digital door lock) and takes measures in response thereto.

As shown in Fig. 14, if a user leaks an authentication code when threatened by a criminal, the user operates the transformation device (S2000) to wirelessly send a predetermined transformation signal to the user device (digital door lock) predetermined by the user (S2100). For convenience of description, in this embodiment, the transformation signal is assumed to be received by the user device (digital door lock) before the criminal inputs the authentication code to the user device (digital door lock).

When the criminal inputs the authentication code, which the criminal has gained by threatening the user, into the user device (digital door lock) (S2200), a code transformation module (not shown) of the user device (digital door lock) identifies whether the user device receives the transformation signal from the transformation device. If the user device has received the transformation signal, the code transformation module switches the authentication code input by the criminal to a control code corresponding to the authentication code (S2300) and transmits the control code to a code processing module (not shown).

The code processing module (not shown) determines whether a security code received from the code transformation module is an authentication code or a control code (S2400), and, if the received security code is an authentication code, unlocks the user device (digital door lock) (S2500).

In this embodiment, the authentication code is switched to a control code through operation of the transformation device, and the authentication code may be recognized as a control code or an authentication code by the user device.

If the security code received from the code transformation module is a control code, the code processing module operates in the normal mode to unlock the user device (digital door lock) (S2600) and performs an additional function corresponding to the additional code in the control code (S2700). In this embodiment, notifying the response server (security server) of the fact that a user is in danger is set as execution of the additional function.

Determining whether the security code is the authentication code or the control code (S2400) is sequentially described to properly describe this embodiment, and thus may actually be simultaneously performed or in a different order.

When a criminal is aware of execution of the additional function, i.e. the function of notifying the response server (security server) of an emergency situation, it is difficult to ensure safety of the user. Thus, it is desirable that display of information relevant to execution of the additional function be blocked (S2800).

Although some embodiments have been disclosed above, it should be understood that these embodiments are given by way of illustration only, and that various modifications, variations, and alterations can be made without departing from the spirit and scope of the present invention. Therefore, the scope of the present invention should be limited only by the accompanying claims and equivalents thereof.

## Claims

1. An electronic device having a user security code input function, comprising:
a code input unit receiving a security code from a user;
a code storage unit storing an authentication code and an additional code for identifying whether the security code received from a user is an authentication code allowing entry into a normal operation mode or a control code comprising a separate additional code used in an additional situation; and
a code control unit comparing the received security code with the authentication code and the additional code stored in the code storage unit to determine whether the received security code is the authentication code or the control code,
wherein the code control unit allows the electronic device to perform an operation corresponding to the authentication code when the security code received by the code input unit is the authentication code, whereas the code control unit allows the electronic device to perform an additional operation corresponding to the additional code when the security code is the control code comprising the additional code.

2. The electronic device according to claim 1,
wherein the additional function corresponding to the additional code in the control code comprises the operation corresponding to the authentication code; and
wherein the code control unit extracts the authentication code corresponding to the additional code from the code storage unit storing the authentication code, and allows the electronic device to execute the authentication code extracted from the code storage unit, or transmits the authentication code to a service providing server, thereby performing the same operation as the operation corresponding to the authentication code input to the code input unit.

3. The electronic device according to claim 1,
wherein the control code comprises the authentication code;
wherein the code control unit extracts the authentication code in the received control code to perform authentication and executes an operation corresponding to the authentication code; and
wherein the control code does not allow the electronic device to perform a normal operation corresponding to the authentication code without authentication of the extracted authentication code.

4. The electronic device according to claims 1 to 3,
wherein the control code is a code in which the authentication code and at least one additional code are combined into one code; and
wherein the code control unit identifies a location of the additional code in the control code through an additional code identifier further comprised in the control code or separately stored additional code identification information.

5. The electronic device according to claim 4, wherein the electronic device is a user-input electronic device, receives the control code from a user through the code input unit, normally operates by the authentication code in the control code received by the electronic device, and performs the additional function corresponding to the additional code.

6. The electronic device according to claim 5, wherein the electronic device has a user lock code entry function and comprises at least one of a smartphone, a tablet, a computer, a banking terminal with a wired and wireless communication function capable of performing banking transactions such as an ATM and a household or automotive door lock.

7. The electronic device according to claim 5,
wherein the authentication code is a code related to a security function of the electronic device, performs a function related to locking/unlocking of the electronic device and a function related to login to the electronic device, and is used for at least one of unlocking of the electronic device, entry into a system, and program operating; and
wherein the additional operation of the additional code executes the additional function corresponding to the additional code in addition to the normal operation corresponding to the authentication code, or restricts execution of a predefined function among the normal operations corresponding to the authentication code or a predefined function among normal operations irrelevant to execution of the authentication code.

8. The electronic device according to claim 4, wherein the electronic device is a user-input device, comprises a communication unit exchanging information with an external system, receives the control code from a user through the code input unit, and transmits the control code to an external service providing server to request the server to perform the additional function corresponding to the additional code.

9. The electronic device according to claim 8,
wherein the electronic device comprises at least one of a smartphone, a tablet, a computer, and a banking terminal with a wired and wireless communication function capable of performing banking transactions such as an ATM; and
wherein the authentication code is a code related to a security function of the service providing server, performs a function related to locking/unlocking of the service providing server and a function related to login to the service providing server, and is used for at least one of entry into a system of the service providing server and operating program.

10. The electronic device according to claim 4, wherein the additional code identifier is an input identifier allowing the code control unit to identify the additional code in the control code, and comprises at least one selected from location of the additional code in the control code, order, characteristics, size, and string length of the additional code.

11. The electronic device according to claim 4, wherein the additional code identification information comprises a string length of the authentication code or a specification information specifying start position of the additional code.

12. The electronic device according to claim 4, wherein the code control unit controls an additional module to perform the additional function corresponding to the additional code when the authentication code of the control code is authenticated.

13. The electronic device according to claim 4,
wherein the control code is composed of at least one of numerals, letters, figures, function keys, user biometrics, regions, patterns, sounds, gestures, and special symbols; and
wherein, when the control code to be input is set in the form of a pattern, a pattern entered after a pattern corresponding to the authentication code, having a predefined number of points linked to one another, is recognized as a pattern corresponding to the additional code.

14. The electronic device according to claim 4, wherein the electronic device is a service providing server having a user security code receiving function, the service providing server comprising a code receiving unit receiving the control code which a user enters into a user-input electronic device, the service providing server inputting the control code received by the code input unit into the code control unit, the service providing server performing an operation corresponding to the authentication code in the control code received by the code receiving unit and an additional operation corresponding to the additional code.

15. The electronic device according to claim 14, wherein the service providing server is a server that performs at least one of a banking service, a communication service, an Internet service, and a security service in association with the user input electronic device, and performs an additional operation corresponding to the received additional code.

16. The electronic device according to claim 14, wherein the service providing server comprises: a code extraction unit extracting the additional code from the control code received from the user-input electronic device; and a code execution unit executing an additional operation corresponding to the additional code in the control code extracted by the code extraction unit to perform functions corresponding to the respective codes.

17. The electronic device according to claim 16, wherein the code execution unit authenticates the authentication code of the control code to perform functions related to unlocking or login and performs additional functions corresponding to the additional code of the control code.

18. The electronic device according to claims 1 to 3,
wherein the electronic device is a user-input electronic device, comprises an information display unit displaying status of the electronic device and information processing results, and a communication unit allowing the electronic device to exchange information with an external system, and receives a security code from a user through the code input unit;
wherein the code control unit determines whether the received security code is the authentication code or the control code, and, when the received security code is the control code, the code control unit determines whether the control code is a dummy control code comprising an additional code having an additional function to masquerade as the authentication code, performs an operation corresponding to the authentication code, and displays results thereof on the information display unit;
wherein, in execution of the additional function, the electronic device notifies a predetermined external response agency of occurrence of an emergency through the communication unit without any display on the information display unit, and displays a dummy display corresponding to the additional code on the information display unit.

19. The electronic device according to claim 18,
wherein the electronic device is a mobile device or a computer;
wherein the security code is a login or unlock password of the electronic device; and
wherein the dummy display is hiding at least one of one or more predetermined applications, icons, and folders from a screen.

20. The electronic device according to claim 18,
wherein the electronic device is a mobile device or a computer;
wherein the security code is a login password for an online storage service or an email service remotely provided from outside of the electronic device; and
wherein the dummy display is hiding at least one predetermined computer file or at least one predetermined received email from a screen.

21. The electronic device according to claim 18, wherein the electronic device is a banking device;
wherein the security code is a password for performing at least one of account balance inquiry, account transfer, and cash withdrawal; and
wherein the dummy display comprises at least one of displaying a preset balance instead of an actual balance, pretending to perform account transfer, and pretending that a user account has been frozen due to lack of funds.

22. The electronic device according to claim 18, wherein the electronic device is remotely controlled by the predetermined external response agency through the communication unit in execution of the additional operation, and remote control comprises at least one of camera operation, voice recording, speaker operation, location confirmation, location tracking, and message transmission.

23. The electronic device according to claim 18,
wherein the code input unit comprises at least one of a keypad, a touchscreen, a camera, a biometric data sensor, a microphone, and a dial;
wherein the security code entirely or partially comprises at least one of numerals, letters, figures, function keys, user's biometrics, regions, patterns, sounds, gestures, and special symbols; and
wherein a display on the information display unit is composed of at least one of an image, sound, vibration, smell, heat, and light.

24. The electronic device according to claim 18, further comprising:
a security camera capable of tracking and photographing a face of a current user of the electronic device,
wherein, when the security code inputted to the code input unit is the control code, the security camera is controlled to photograph a face of the user.

25. The electronic device according to claim 18, wherein the predetermined external response agency comprises at least one of a fire station, a police station, a security company, and a guardian.

26. The electronic device according to claims 1 to 3, wherein the electronic device is a user-input electronic device, and comprises an information display unit displaying status of the electronic device and information processing results, and a communication unit allowing the electronic device to exchange information with an external system, and a machinery for realizing physical movement of the electronic device in response to the received security code, the electronic device receiving a security code from a user through the code input unit;
wherein the code control unit determines whether the received security code is the authentication code or the control code, and, when the received security code is the control code, the code control unit determines whether the control code is a dummy control code comprising an additional code having an additional function to masquerade as the authentication code, allows the machinery to perform an operation corresponding to the authentication code, and displays results thereof on the information display unit; and
wherein, in execution of the additional function, the electronic device notifies a predetermined external response agency of occurrence of an emergency through the communication unit without any display on the information display unit, transmits an instruction to perform an operation corresponding to the dummy control code to at least one separate auxiliary device outside the electronic device, allows the machinery to perform an operation corresponding to the authentication code, and displays results thereof on the information display unit.

27. The electronic device according to claim 26,
wherein the electronic device is a digital door lock;
wherein the at least one separate auxiliary device outside the electronic device is an indoor light; and
wherein an additional operation on the auxiliary apparatus is executed such that the indoor light does not light up even when a switch controlling on/off of the indoor light is ON.

28. The electronic device according to claim 26,
wherein the electronic device is a digital door lock,
wherein the at least one separate auxiliary device outside the electronic device is an indoor camera; and
wherein an additional operation on the auxiliary apparatus is executed such that the camera photographs a space inside the door as soon as the door is opened.

29. The electronic device according to claim 26,
wherein the electronic device is a digital door lock;
wherein the at least one separate auxiliary device outside the electronic device is a recorder disposed inside a door; and
wherein, when the control code is input to the electronic device, an operation corresponding to the control code is executed such that the recorder starts recording as soon as the door is opened.

30. The electronic device according to claims 1 to 3,
wherein the electronic device is a user-input electronic device, and comprises an information display unit displaying a status of the electronic device and information processing results, and a communication unit allowing the electronic device to exchange information with an external system, the electronic device receiving a security code from a user through the code input unit;
wherein the code control unit determines whether the received security code is the authentication code or the control code, and, when the received security code is the control code, the code control unit determines whether the control code is a dummy control code comprising an additional code having an additional function to masquerade as the authentication code, and an operation corresponding to the authentication code is executed such that the electronic device transmits the authentication code to a service providing server through the communication unit, receives results of information processing corresponding to the authentication code by the service providing server, and displays the results in the information display unit; and
wherein, in execution of the additional function, the electronic device notifies a predetermined external response agency of occurrence of an emergency through the communication unit without any display on the information display unit while performing an operation corresponding to the authentication code.

31. The electronic device according to claim 30, wherein the electronic device is a mobile device or a computer, and the security code is a login password for a service provided by an external server outside the electronic device.

32. The electronic device according to claim 30,
wherein the electronic device is a banking device;
wherein the security code is a password for performing at least one of account balance inquiry, account transfer, and cash withdrawal; and
wherein the service providing server is a server through which a banking institution provides an online service to a user that wants to bank with the banking institution.

33. The electronic device according to claims 1 to 3,
wherein the electronic device is a user-input electronic device, and comprises an information display unit displaying status of the electronic device and information processing results, and a communication unit allowing the electronic device to exchange information with an external system, the electronic device receiving a security code from a user through the code input unit;
wherein the code control unit determines whether the received security code is the authentication code or the control code, and, when the received security code is the control code, the code control unit determines whether the control code is a dummy control code comprising an additional code having an additional function masquerade as the authentication code, performs a normal operation corresponding to the authentication code, and displays results thereof on the information display unit; and
wherein, in execution of the additional operation, the electronic device notifies a predetermined external response agency of occurrence of an emergency through the communication unit without any display on the information display unit while performing an operation corresponding to the authentication code.

34. The electronic device according to claim 33, wherein the electronic device is a mobile device or a computer, and the security code is a login or unlock password of the electronic device.

35. The electronic device according to claims 1 to 3, further comprising:
a code input unit control module activating the code input unit according to a predetermined rule to await input of the security code by a user even after the authentication code is input to the code input unit,
wherein the electronic device performs the additional function corresponding to input of the control code when the security code is not input while awaiting input.

36. The electronic device according to any one of claims 1 to 3, wherein the authentication code comprises a plurality of authentication codes for different uses, the number of control codes is the same as the number of authentication codes, and the control code corresponds to the authentication code in a one-to-one manner.

37. The electronic device according to any one of claims 1 to 3, wherein the control code is composed of a combination of a transformation signal and the authentication code, and, when the authentication code combined with the transformation signal is input, the authentication code allows the electronic device to perform both an operation corresponding to an authentication code not having the control code and an operation corresponding to the control code.

38. The electronic device according to claim 37, wherein the transformation signal comprises at least one of touch on the electronic device, impact, shaking, button pushing, and voice recognition.

39. The electronic device according to claim 37, wherein the electronic device wirelessly receives the transformation signal from a mobile device separate from the electronic device.

40. The electronic device according to any one of claims 1 to 3, wherein the electronic device receives the control code all at once or receives the control code in sections by pretending to receive a separate code through a display module.

41. The electronic device according to any one of claims 1 to 3, further comprising:
a user information control unit controlling an additional information module associated with an additional information to acquire the additional information for performing the additional operation,
wherein the additional information comprises at least one of location of the electronic device, motion, tilt, photograph, fingerprint, and voice, and the additional information module comprises at least one of a GPS module, a motion sensor, a tilt sensor, a camera, a fingerprint module, and a microphone.

42. The electronic device according to claim 1,
wherein the code control unit analyzes a structure of the control code to identify a combination of the authentication code, an additional code identifier, and the additional code; and
wherein the electronic device further comprises a user information control unit collecting and processing location information of the electronic device and user personal information, and a central processing unit controlling the code input unit and the code control unit to control user authentication and execution of the additional function of the electronic device based on the control code.

43. A transformation device used in a security system having a user security code input function, comprising:
an apparatus operating unit operable when a user is in an emergency, and
a transformation communication unit wirelessly transmitting a transformation signal to a user electronic device upon operation of the apparatus operating unit,
wherein the operation causing transmission of the transformation signal is at least one of touch on the transformation device, impact, shaking, button pushing, and voice recognition,
wherein the transmitted transformation signal is combined with an authentication code provided to the user electronic device to be switched into a control code for performing an additional operation of the user electronic device, and
wherein, when an authentication code is input to the user electronic device after transmission of the transformation signal, the authentication code allows the user electronic device to perform both an operation corresponding to an authentication code not having the control code and an operation corresponding to the control code.

44. A recording medium recording a control program for controlling an electronic device having a user security code input function,
wherein the electronic device stores an authentication code which is a security code allowing the electronic device to enter into a normal operation mode, and stores, in addition to the authentication code, an additional code used in an additional situation; and
wherein, the control program determines whether a security code received by a code input unit is the authentication code or a control code including the additional code, allows the electronic device to perform an operation corresponding to the authentication code when the security code received by the code input unit is the authentication code, while allowing the electronic device to perform an additional operation corresponding to the additional code when the security code is the control code including the additional code.

45. A recording medium recording a control program for controlling an electronic device having a user security code input function,
wherein, the control program allows the electronic device to receive a security code from a user, to display status of the electronic device and information processing results, to determine whether the received security code is an authentication code or a control code, and, when the received security code is the control code, to determine whether the control code is a dummy control code including an additional code having an additional function, to exchange information with an external system, and when the received security code is the authentication code allows to performs an operation corresponding to the authentication code, and to display results thereof, and, when the received security code is the dummy control code, allows to notify an external response agency of occurrence of an emergency without any display, and to display a dummy display corresponding to the additional code.

46. A security system having a user security code input function, comprising:
a code input unit receiving a security code;
a code storage unit storing a control code separate from the authentication code, and the control code is a security code used in an additional situation; and
a code control unit determining whether the security code received by the code input unit is the authentication code or the control code and processing the security code based thereon,
wherein the code control unit performs an operation corresponding to the authentication code when the security code received by the code input unit is the authentication code, and performs an additional operation corresponding to the additional code in the control code when the security code received by the code input unit is the control code.

47. The security system according to claim 46, wherein, when the authentication code is stored outside the control code, the code control unit extracts the authentication code and authenticates the authentication code to execute an operation corresponding to the authentication code, and does not perform normal operation of an electronic device by the received control code alone without input of the authentication code, and when the control code includes the authentication code, the code control unit extracts the authentication code from the control code and performs authentication to execute an operation corresponding to the authentication code, and does not perform normal operation corresponding to the authentication of the electronic device by the control code alone without input of the extracted authentication code.

48. The system for controlling use of a device using a code input method according to claim 46, wherein the user device is a portable electronic device having a mobile communication function such as a smartphone or a tablet; a banking terminal with a wired and wireless communication function capable of performing banking transactions such as an ATM; a household or automotive door lock having a communication function; and an electronic device having a communication function and a user lock code input function.

49. The system for controlling use of a device using a code input method according to claim 46, wherein the authentication code is a code related to a security function of the user device or a service providing server and performs a function related to locking/unlocking of the user device or the service providing server and a function related to login.

50. A security system having a user security code input function, comprising:
an electronic device receiving a security code; and
a predetermined external response agency capable of communicating with the electronic device by wire or wirelessly,
wherein, when a security code received by the electronic device is an authentication code, the electronic device performs an operation corresponding to the authentication code and displays results thereof on an information display unit provided to the electronic device, and
when a security code received by the electronic device is a control code and the control code is a dummy control code including an additional code having an additional function to masquerade as the authentication code, the electronic device notifies the external response agency of occurrence of an emergency without any display on the information display unit, and displays a dummy display corresponding to the additional code on the information display.

51. A system for controlling use of a device using a code input method used for a user device having a code input function and a communication function,
wherein the user device stores a control code in which an authentication code, an additional code identifier and at least one of a plurality of additional codes are combined into a single code, and an additional function performed in response to the additional code,
wherein the user device performs the additional function corresponding to the additional code when the user device is unlocked by the authentication code of the control code received by the user device, and
wherein, when the additional function is not executable by the user device, the user device transmits the control code to an external service providing server communicatively connected to the user device to request the external service providing server to execute the additional function.

52. A method for responding to an additional situation using a security system having a user security code input function, comprising:
storing an authentication code, which is a security code for authentication allowing an electronic device to enter into a normal operation mode;
storing an additional code used in an additional situation, separately from the authentication code;
determining whether a security code received by a code input unit is the authentication code or a control code including the additional code;
performing an operation corresponding to the authentication code when the security code received by the code input unit is the authentication code, and
performing an additional operation corresponding to the additional code in the control code by the electronic device when the security code received by the code input unit is the control code.

53. A method for responding to an emergency situation using a security system having a user security code input function, comprising:
receiving, by an electronic device, a security code;
determining whether the security code received by the electronic device is an authentication code or a control code;
when the received security code is the control code, determining whether the control code is a dummy control code including an additional code having an additional function to masquerade as the authentication code;
when the received security code is the authentication code, performing, by the electronic device, an operation corresponding to the authentication code and displaying results thereof on an information display unit provided to the electronic device; and
when the received security code is the dummy control code, notifying, by the electronic device, a predetermined external response agency of occurrence of an emergency by wire or wirelessly without any display on the information display unit and displaying a dummy display corresponding to the additional code on the information display unit.

54. A method for responding to an emergency situation using a security system having a user security code input function, comprising:
receiving, by an electronic device, a security code;
determining whether the received security code is an authentication code or a control code;
when the received security code is the authentication code, operating, by the electronic device, a machinery provided to the electronic device in response to the authentication code and displaying results thereof on an information display unit; and
when the received security code is the control code and the control code includes an additional code having an additional function to masquerade as the authentication code, notifying, by the electronic device, a predetermined external response agency of occurrence of an emergency without any display on the information display unit, transmitting an instruction to perform an operation corresponding to the control code to at least one auxiliary apparatus, allowing the machinery to perform an operation corresponding to the authentication code, and displaying results thereof on the information display unit.

55. A method for responding to an emergency situation using a security system having a user security code input function, comprising:
receiving, by a user device, a security code;
when the received security code is an authentication code, transmitting, by the user device, the authentication code to a service providing server and receiving results of information processing corresponding to the authentication code performed by the service providing server and displaying the results on an information display unit provided to the user device; and
when the received security code is the control code and the control code includes an additional code having an additional function to masquerade as the authentication code, transmitting, by the user device, the authentication code to the service providing server and receiving results of information processing corresponding to the authentication code performed by the service providing server and displaying the results on the information display unit provided to the user device, and notifying a predetermined external response agency of occurrence of an emergency without any display on the information display unit.

56. A method for controlling use of a device using a code input method which is used for a user device having a code input function and a communication function, comprising:
receiving, by the user device, a control code in which an authentication code, an additional code identifier, and at least one of a plurality of additional codes are combined into a single code;
analyzing, by the user device, the received control code; and
authenticating the authentication code of the control code to unlock the user device, and, when the user device is unlocked, performing, by the user device, an additional function corresponding to the additional code of the control code.

57. The method according to claim 56, further comprising:
when the additional function corresponding to the additional code of the control code is not executable by the user device after the user device is unlocked, transmitting the control code to an external service providing server communicatively connected to the user device to request the external service providing server to execute the additional function.

58. The method according to claim 57, comprising:
receiving, by the service providing server requested to execute the additional function, the control code from the user device;
extracting an additional code relevant to a specific function or service from the received control code; and
performing the additional function corresponding to the additional code extracted from the control code.

59. The method according to claim 56, wherein, in performing, by the user device, an additional function, when a meaningless numeral, letter, or special character, which is not registered as the additional code, is input to an additional code portion, only a function corresponding to the authentication code of the control code is performed.

60. The method according to claim 56, wherein the control code comprises at least one of additional codes set corresponding to a function for user convenience and a function for reporting an emergency.
